# EUROPEAN PATENT APPLICATION

(11) **EP 4 796 921 A1**
(43) Date of publication of application: **26.08.2026**
(21) Application number: 26159746.2
(22) Date of filing: 20.02.2026
(51) Int. Cl.: G01N 23/04, G01N 23/18

(54) **CONTROL DEVICE, X-RAY INSPECTION DEVICE, CONTROL METHOD, AND CONTROL PROGRAM FOR DEFECT INSPECTION**

(30) Priority: 21.02.2025 JP 2025026960
(71) Applicant: Ishida Co., Ltd., Kyoto 606-8392 (JP)
(72) Inventor: TANAKA, Hidetoshi, Ritto-shi, Shiga, 520-3026 (JP)
(74) Representative: Global IP Europe Patentanwaltskanzlei

(57) **Abstract**

Object

To provide a control device (9), an X-ray inspection device (1), a control method, and a control program for defect inspection, which make it possible to easily adjust parameters.

Solution

An X-ray inspection device (1) includes a control device (9) configured to display, on a display operation unit (8), an image (O) of an article (G) obtained by irradiating the article (G) with X-rays, and an adjustment screen (AD) on which a plurality of parameters are adjustable, the parameters being related to each of a plurality of inspections for detecting a defect in the article (G) based on the image (O), and the display control unit displays, on the image (O), only a detection result of the inspection corresponding to the parameters being adjusted when the parameters are adjusted on the adjustment screen (AD).

## Description

### Technical Field

The present invention relates to a control device, an X-ray inspection device, a control method, and a control program for defect inspection.

### Background Art

Patent Document 1 discloses an inspection device that inspects an article based on an image of the article, the inspection device including a determination unit that determines whether the article has a defect based on the image, a display unit that displays the image, and an image adjustment unit that adjusts the image displayed on the display unit, in which the determination unit determines whether the defect is a first defect for which removal from the article is highly necessary, or a second defect other than the first defect, and the image adjustment unit adjusts the image so that a display mode of the defect in the image differs according to whether the first defect is included or whether the first defect is not included.

### Citation List

### Patent Literature

Patent Document 1: JP 2021-025874 A

### Summary of Invention

### Technical Problem

The inspection device and the like described above may perform a plurality of inspections in combination to detect defects, foreign substances, and the like. For this reason, in the inspection device and the like, it is necessary to adjust (set) parameters for each of the plurality of inspections. The parameters are adjusted by an operator operating numerical values and the like on a setting screen. In order to appropriately adjust each of the plurality of parameters, it is necessary to recognize, on an adjustment screen, changes in detection results according to changes in the parameters. However, since the plurality of detection results are displayed on the adjustment screen at the same time, it is not easy to distinguish and recognize the detection results of the parameters. For this reason, it is not easy for the operator with a low proficiency level in parameter adjustment to adjust the parameters. As a result, parameter adjustment may vary depending on the operator's proficiency level.

According to an aspect of the present disclosure, an object thereof is to provide a control device, an X-ray inspection device, a control method, and a control program for defect inspection, which make it possible to easily adjust parameters.

### Solution to Problem

(1) A control device for defect inspection according to an aspect of the present disclosure includes a display control unit configured to display, on a display unit, an image of an article obtained by irradiating the article with X-rays, and an adjustment screen on which a plurality of parameters are adjustable, the parameters being related to each of a plurality of inspections for detecting a defect in the article based on the image, in which, the display control unit displays, on the image, only a detection result of the inspection corresponding to the parameters being adjusted when the parameters are adjusted on the adjustment screen.

In the control device for defect inspection according to an aspect of the present disclosure, when the parameters are adjusted on the adjustment screen, the display control unit displays, on the image, only a detection result of the inspection corresponding to the parameters being adjusted. That is, in the control device for defect inspection, detection results of inspections corresponding to parameters other than those being adjusted are not displayed on the image. For this reason, in the control device for defect inspection, parameters can be adjusted while confirming only a detection result of the parameters being adjusted. Thereby, in the control device for defect inspection, changes in detection result according to changes in parameters can be recognized, and thus the parameters can be appropriately adjusted. In this manner, in the control device for defect inspection, parameters can be easily adjusted.

(2) The control device for defect inspection according to (1) above may further include a first acquisition unit configured to acquire information indicating that adjustment of the parameters has ended, in which, the display control unit displays a defect detection result of each of the plurality of inspections on the image when the first acquisition unit acquires the information indicating that adjustment of the parameters has ended. With this configuration, when the adjustment of the parameters has ended, detection results for all inspections can be displayed on the image without any operation being performed by an operator.

(3) In the control device for defect inspection according to (2) above, the adjustment screen may include a plurality of presentation parts, each of which indicates whether adjustment of the plurality of parameters has ended, and the display control unit highlights and displays the presentation part corresponding to the parameters when the first acquisition unit acquires the information indicating that adjustment of the parameters has ended. With this configuration, it is possible to recognize at a glance parameters for which adjustment has ended.

(4) In the control device for defect inspection according to (2) or (3) above, the first acquisition unit may determine that adjustment of the parameters has ended when a predetermined time has elapsed since stopping an operation to adjust the parameters. With this configuration, the acquisition unit can determine the point in time when the parameter adjustment has ended.

(5) In the control device for defect inspection according to (4) above, the display control unit displays, on the display unit, a warning indicating that adjustment of other parameters has not ended after adjustment of one of the parameters has ended, when adjustment of the other parameters has not been performed, and when a predetermined time has elapsed since the end of adjustment of the one of the parameters. With this configuration, an operator can recognize that there are parameters that have not been adjusted.

(6) The control device for defect inspection according to any one of (1) to (5) above may further include a determination unit configured to determine whether adjustment of each of the plurality of parameters has ended, in which, the display control unit displays, on the display unit, an indication prompting a reinspection including acquiring the image of the article and detecting a defect in the article using the parameters having been adjusted when the determination unit determines that adjustment of each of the plurality of parameters has ended. With this configuration, after the adjustment of the parameters has ended, the operator can be prompted to perform an inspection based on the parameters having been adjusted.

(7) The control device for defect inspection according to any one of (1) to (6) above may further include a second acquisition unit configured to acquire information indicating that adjustment of the parameters has started, in which the display control unit displays a detection result of each of the plurality of inspections on the image before adjustment of the parameters starts.

(8) In the control device for defect inspection according to (7) above, the second acquisition unit may determine that adjustment of the parameters has started when an operation to adjust the parameters has started. With this configuration, it is possible to determine the point in time when the parameter adjustment has started.

(9) An X-ray inspection device according to an aspect of the present disclosure includes: a conveyance unit configured to continuously convey an article; an irradiation unit configured to irradiate the article with X-rays; a detection unit configured to detect the X-rays emitted from the irradiation unit and transmitted through the article; an image acquisition unit configured to acquire the image of the article generated based on a detection result of the detection unit; and the control device for defect inspection according to any one of (1) to (8) above.

The X-ray inspection device according to an aspect of the present disclosure includes the above-described control device for defect inspection. For this reason, in the X-ray inspection device, it is possible to easily adjust parameters.

(10) A control method according to an aspect of the present disclosure includes displaying, on a display unit, an image of an article obtained by irradiating the article with X-rays, and an adjustment screen on which a plurality of parameters are adjustable, the parameters being related to each of a plurality of inspections for detecting a defect in the article based on the image, in which, the displaying of the image includes displaying, on the image, only a detection result of the inspection corresponding to the parameters being adjusted when the parameters are adjusted on the adjustment screen.

In the control method according to an aspect of the present disclosure, the display of the image includes, when the parameters are adjusted on the adjustment screen, displaying, on the image, only a detection result of the inspection corresponding to the parameters being adjusted. That is, in the control method, detection results of inspections corresponding to parameters other than those being adjusted are not displayed on the image. For this reason, in the control method, parameters can be adjusted while confirming only a detection result of the parameters being adjusted. Thereby, in the control method, changes in detection result according to changes in parameters can be recognized, and thus the parameters can be appropriately adjusted. In this manner, in the control method, parameters can be easily adjusted.

(11) A control program according to an aspect of the present disclosure causes a computer to function as a display control unit configured to display, on a display unit, an image of an article obtained by irradiating the article with X-rays, and an adjustment screen on which a plurality of parameters are adjustable, the parameters being related to each of a plurality of inspections for detecting a defect in the article based on the image, in which, the display control unit displays, on the image, only a detection result of the inspection corresponding to the parameters being adjusted when the parameters are adjusted on the adjustment screen.

In the control program according to an aspect of the present disclosure, when the parameters are adjusted on the adjustment screen, the display control unit displays, on the image, only a detection result of the inspection corresponding to the parameters being adjusted. That is, in the control program, detection results of inspections corresponding to parameters other than those being adjusted are not displayed on the image. For this reason, in the control program, a parameter can be adjusted while confirming only a detection result of the parameters being adjusted. Thereby, in the control program, changes in detection result according to changes in parameters can be recognized, and thus the parameters can be appropriately adjusted. In this manner, in the control program, parameters can be easily adjusted.

### Advantageous Effects of Invention

According to an aspect of the present invention, it is possible to easily adjust parameters.

### Brief Description of Drawings

FIG. 1 is a configuration diagram illustrating an X-ray inspection device according to an embodiment.
FIG. 2 is a configuration diagram illustrating an interior of a shield box illustrated in FIG. 1.
FIG. 3 is a diagram illustrating an example of a screen displayed on a display operation unit.
FIG. 4 is a diagram illustrating an example of a screen displayed on the display operation unit.
FIG. 5 is a diagram illustrating an example of a screen displayed on the display operation unit.
FIG. 6 is a diagram illustrating an example of a screen displayed on the display operation unit.
FIG. 7 is a diagram illustrating an example of a screen displayed on the display operation unit.

### Description of Embodiments

A preferred embodiment of the present invention will be described below in detail with reference to the attached drawings. Note that, in the description of the drawings, the same or equivalent elements are denoted by the same reference signs and redundant descriptions thereof are omitted.

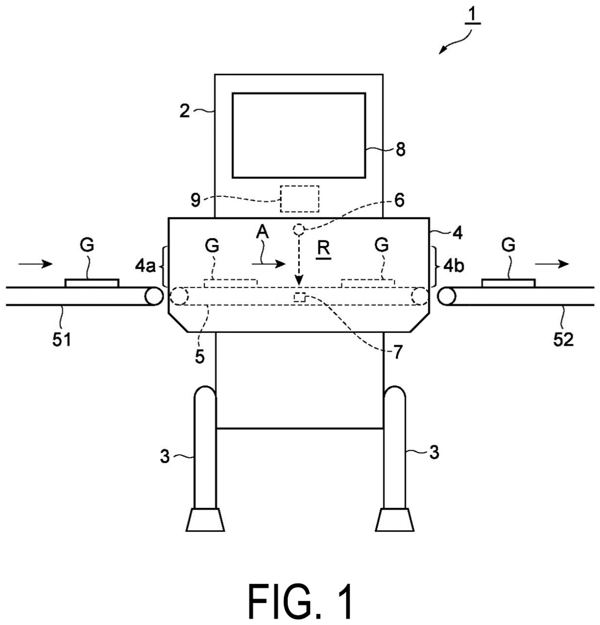

As illustrated in FIG. 1, an X-ray inspection device 1 includes a device main body 2, support legs 3, a shielding box 4, a conveyance unit 5, an X-ray irradiation unit 6, an X-ray detection unit 7, a display operation unit 8, and a control device (a control device for defect inspection, an image acquisition unit) 9. The X-ray inspection device 1 generates an X-ray transmission image of an article G while conveying the article G, and inspects the article G based on the X-ray transmission image. The article G before inspection is carried into the X-ray inspection device 1 by a carry-in conveyor 51. The article G after inspection is carried out from the X-ray inspection device 1 by a carry-out conveyor 52.

The device main body 2 accommodates the control device 9 and the like. The support legs 3 support the device main body 2. The shield box 4 is provided at the device main body 2. The shield box 4 is a housing for preventing leakage of X-rays (electromagnetic waves) to the outside. In the shield box 4, an inspection room R is provided in which inspection of the article G by X-rays is performed. The shield box 4 is formed with a carry-in port 4a and a carry-out port 4b. The article G before the inspection is carried into the inspection room R from the carry-in conveyor 51 through the carry-in port 4a. The article G after the inspection is carried out of the inspection room R to the carry-out conveyor 52 through the carry-out port 4b.

The conveyance unit 5 is a member for continuously conveying the article G and is disposed to pass through the center of the shield box 4. The conveyance unit 5 conveys the article G in a conveyance direction A from the carry-in port 4a through the inspection room R to the carry-out port 4b. The speed (conveyance speed) at which the article G is conveyed by the conveyance unit 5 is set by the control device 9, for example. The conveyance unit 5 is, for example, a belt conveyor that is stretched between the carry-in port 4a and the carry-out port 4b. The conveyance unit 5 may protrude outward from the carry-in port 4a and the carry-out port 4b.

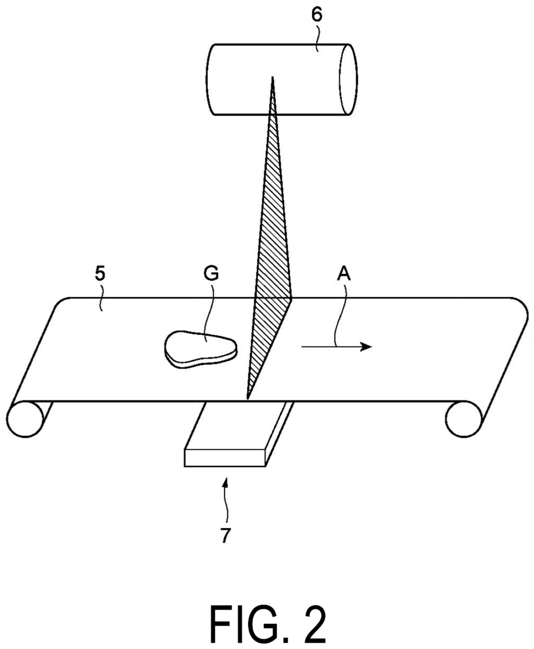

As illustrated in FIGS. 1 and 2, the X-ray irradiation unit 6 is an electromagnetic wave irradiation unit arranged in the shield box 4, and irradiates the article G conveyed by the conveyance unit 5 with X-rays. The X-rays include X-rays of various energy regions from low energy (long wavelength) to high energy (short wavelength). For this reason, the X-ray irradiation unit 6 irradiates the article G conveyed to the conveyance unit 5 with X-rays of a plurality of energy regions. After the activation of the X-ray inspection device 1 and before the inspection of the article G, the X-ray irradiation unit 6 may perform irradiation with X-rays (that is, idling of the X-ray irradiation unit 6). The above-described "low" and "high" in the low energy and high energy represent being relatively "low" and "high" among the plurality of energy regions irradiated from the X-ray irradiation unit 6, and do not represent a specific range. Power (particularly, a current) supplied to the X-ray irradiation unit 6 can be changed manually or automatically. By changing the power, the output of the X-rays emitted to the article G can be changed. Thereby, X-rays having an appropriate intensity corresponding to the article G can be emitted.

The X-ray detection unit 7 is a sensor unit that detects electromagnetic waves. The X-ray detection unit 7 is disposed in the shield box 4 at a position facing the X-ray irradiation unit 6 in an up-down direction. The conveyance unit 5 is located between the X-ray detection unit 7 and the X-ray irradiation unit 6 in the up-down direction. The X-ray detection unit 7 detects X-rays and includes a plurality of detection elements (not illustrated) disposed in a planar shape (two-dimensionally).

In the present embodiment, the X-ray detection unit 7 is a direct conversion type detection unit that can detect X-rays by a photon counting method. The detection element is, for example, a sensor (multi-energy sensor) for detecting X-rays in each of a plurality of energy regions transmitted through the article G, and the X-ray detection unit 7 may be a time delay integration sensor (TDI sensor). The detection element includes, for example, a photon detection type sensor such as a CdTe semiconductor detector. In the detection element, for example, electron-hole pairs are generated by the arrival of photons of X-rays. Counting processing of photons (photon counting) is performed based on energy (photon energy) obtained at this time. The counting process is performed by, for example, a calculation unit (not illustrated) included in the X-ray detection unit 7 or the detection element. The results of the counting processing (detection result) of the detection elements by the calculation units are output to the control device 9 at predetermined time intervals, for example. The predetermined time is a time (default time) predetermined by the X-ray inspection device 1. The predetermined time interval described above is also referred to as a read interval or a delay time, and can be appropriately changed by the control device 9.

The display operation unit 8 is a member (display unit) provided in the device main body 2. The display operation unit 8 displays a variety of information and receives input operations of a variety of conditions from the outside. The display operation unit 8 is, for example, a liquid crystal display and displays an operation screen as a touch panel. In this case, the operator can input a variety of conditions via the display operation unit 8. For example, the operator can set the conveyance speed of the conveyance unit 5, power (at least one of a current or a voltage) to be supplied to the X-ray irradiation unit 6, or the like via the display operation unit 8. The input operation received by the display operation unit 8 is output to the conveyance unit 5, the X-ray detection unit 7, the control device 9, and the like.

The control device 9 is disposed inside the device main body 2. The control device 9 controls the operation of each unit of the X-ray inspection device 1. The control device 9 is configured with a central processing unit (CPU), a read only memory (ROM), a random access memory (RAM), and the like. The ROM stores programs for controlling the X-ray inspection device 1, control programs for defect inspection, and the like. The control device 9 functions as a display control unit, a first acquisition unit, a determination unit, and a second acquisition unit.

The control program for defect inspection includes a display control module, a first acquisition module, a determination module, and a second acquisition module. The control program for defect inspection functions when a computer executes the display control module, the first acquisition module, the determination module, and the second acquisition module. The control method for defect inspection is executed when the control program for defect inspection functions. The functions implemented by executing the display control module, the first acquisition module, the determination module, and the second acquisition module are similar to the functions of the display control unit, the first acquisition unit, the determination unit, and the second acquisition unit, respectively.

The control device 9 controls operations of the respective units (in the present embodiment, the conveyance unit 5, the X-ray irradiation unit 6, the X-ray detection unit 7, and the display operation unit 8) of the X-ray inspection device 1. Detection results of the X-ray detection unit 7 are input to the control device 9. The control device 9 acquires (generates) an image of a generated article based on the detection results of the X-ray detection unit 7. The control device 9 determines the quality of the article G based on the image. When the control device 9 determines that the article G contains foreign substances, it determines that the article G is defective. That is, the control device 9 is a control device for defect inspection. When the control device 9 determines that the article G is defective, the determination result is displayed on the display operation unit 8.

The control device 9 determines the quality (defective) of the article G by combining a plurality of inspections. In the X-ray inspection device 1, adjustment can be performed for each of parameters related to the plurality of inspections. The control device 9 displays, on the display operation unit 8, an image of the article G obtained by irradiating the article G with X-rays, and an adjustment screen on which a plurality of parameters related to each of a plurality of inspections for detecting defects in the article G based on the image can be adjusted (step of displaying).

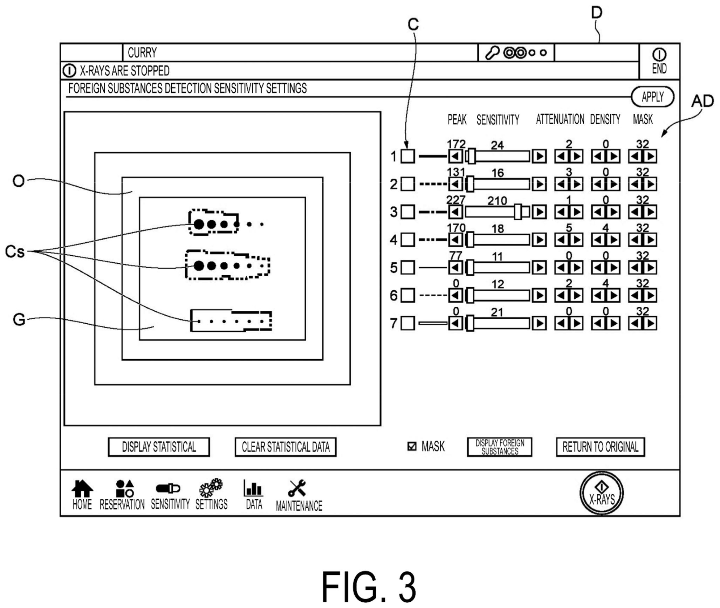

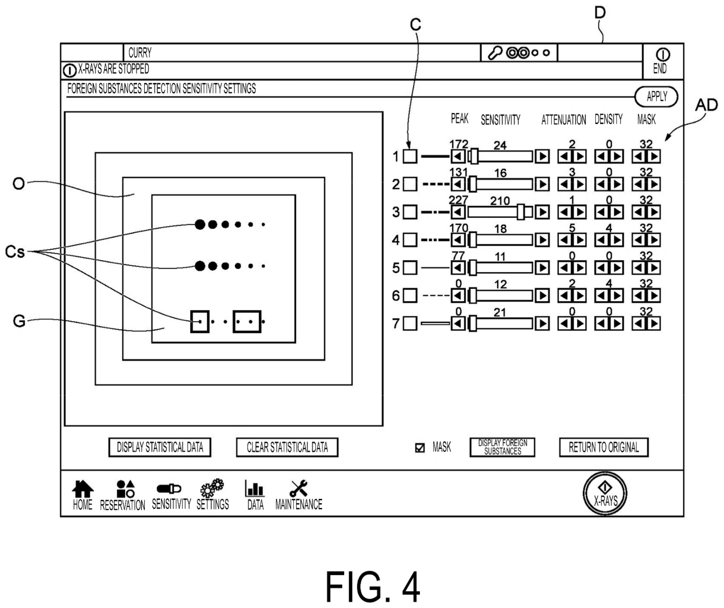

FIGS. 3 and 4 are diagrams illustrating an example of a screen displayed on the display operation unit 8. As illustrated in FIGS. 3 and 4, an image O of an article G and an adjustment screen AD for adjusting parameters are displayed on a screen D of the display operation unit 8. In the example illustrated in FIGS. 3 and 4, the article G and foreign substances Cs contained in the article G are displayed in the image O. In the example of FIGS. 3 and 4, a test piece is displayed as the foreign substance Cs. An End button for ending the display of the screen D, an Apply button for applying settings of parameters, a button for displaying statistical data, a button for clearing statistical data, a foreign substance display button, a button for restoring the original settings, and the like are displayed on the screen D. Buttons such as "Home," "Reservation", "Sensitivity", "Settings", "Data", and "Maintenance" are displayed on the screen D.

Adjustment items for parameters of each of a plurality of inspections are displayed on the adjustment screen AD. In the example illustrated in FIGS. 3 and 4, parameters related to seven inspections of "1" to "7" are displayed. For each inspection, a presentation part C and items of "Peak", "Sensitivity", "Attenuation", "Density", and "Mask" are displayed. An identification element corresponding to each inspection is shown to make it possible to identify (distinguish) detection results of each inspection. In the example illustrated in FIGS. 3 and 4, inspection results for the inspection 1 are shown as a "solid line (thick line)", inspection results for the inspection 2 are shown as a "dashed line (thick line)", inspection results for the inspection 3 are shown as an "alternating dotted-dashed line", inspection results for the inspection 4 are shown as an "alternating two dots-dashed line", inspection results for the inspection 5 are shown as a "solid line (thin line)", inspection results for the inspection 6 are shown as a "dashed line (thin line)", and inspection results for the inspection 7 are shown as a "white line."

The presentation part C shows whether the adjustment has ended. When information indicating that the adjustment of a parameter has ended is acquired, the control device 9 highlights and displays the presentation part corresponding to the parameter. In the present embodiment, the presentation part C is a check box. When information indicating that the adjustment of a parameter has ended is acquired, the control device 9 displays a check mark in the check box corresponding to the parameter. When no check mark is displayed in the presentation part C, this indicates that the adjustment has not ended. When a check mark is displayed in the presentation part C, this indicates that the adjustment has ended.

The parameters "Sensitivity", "Attenuation", "Density", and "Mask" can be adjusted (changed) by operating (pressing) the buttons. The parameter "Sensitivity" can also be adjusted by operating an adjustment bar. When the parameter is adjusted, the value of the displayed parameter will change.

FIG. 3 illustrates a state where no parameter adjustment is being performed on the screen D displayed on the display operation unit 8. As illustrated in FIG. 3, when no parameter adjustment is being performed (before parameter adjustment starts), the control device 9 displays detection results of a plurality of inspections on an image. The control device 9 displays detection results for the inspections 1 to 7 using the set parameters together (simultaneously) on the image O.

When parameters are adjusted on the adjustment screen, the control device 9 displays, on an image, only a detection result of an inspection that corresponds to the parameters being adjusted. The control device 9 determines whether parameter adjustment has started. The control device 9 determines that parameter adjustment has started when an operation to adjust the parameters has started. A case where an operation to adjust the parameters has started is, for example, a case where a user has touched the region of the adjustment screen AD on the display operation unit 8.

FIG. 4 illustrates a state where parameter adjustment is being performed on the screen D displayed on the display operation unit 8. As illustrated in FIG. 4, when it is determined that an operation to adjust the parameters has started, the control device 9 displays, on an image, only a detection result of an inspection corresponding to the parameters being adjusted. In the example illustrated in FIG. 4, when it is determined that an operation to adjust the parameters for the inspection 1 has started, the control device 9 displays, on an image, only a detection result of an inspection corresponding to the parameter of the inspection 1. In this state, when the parameters are changed, the detection results change depending on the parameters.

When information indicating that parameter adjustment has ended is acquired, the control device 9 displays, on an image, detection results of defects for a plurality of inspections. When a predetermined time has elapsed since stopping an operation to adjust the parameters, the control device 9 determines that parameter adjustment has ended and acquires information indicating that the parameter adjustment has ended. The predetermined time may be set as appropriate and may be 5 seconds, for example. When information indicating that parameter adjustment has ended is acquired, the control device 9 displays, on the image O, detection results for the inspections 1 to 7 using the set parameters together (simultaneously). When it is determined that parameter adjustment has ended, the control device 9 displays a check mark in the check box of the presentation part C for the parameter.

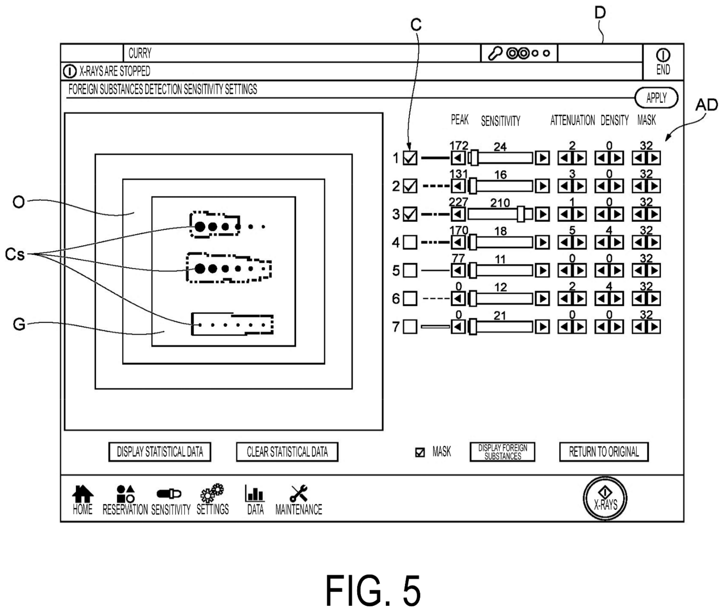

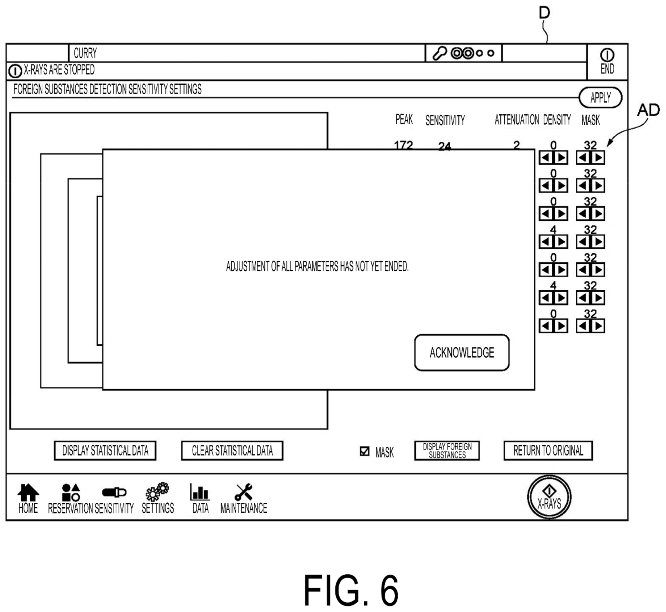

When adjustment of one of a plurality of parameters has ended but adjustment of the other parameters has not been performed, and when a predetermined time has elapsed since the adjustment of the one parameter has ended, the control device 9 displays, on the screen D displayed on the display operation unit 8, a warning indicating that the adjustment of the other parameters has not ended. For example, as illustrated in FIG. 5, when adjustment for the inspections 1 to 3 has ended but adjustment of the parameters of the inspections 4 to 7 has not been performed, and when a predetermined time has elapsed since the adjustment for any of the inspections 1 to 3 has ended, the control device 9 displays, on the screen D, a warning indicating that the parameter adjustment has not ended. FIG. 6 is a diagram illustrating an example of a warning. As illustrated in FIG. 6, the control device 9 displays a pop-up that states, for example, "Adjustment of all parameters has not ended". The display of the pop-up can be finished by pressing an "Acknowledge" button.

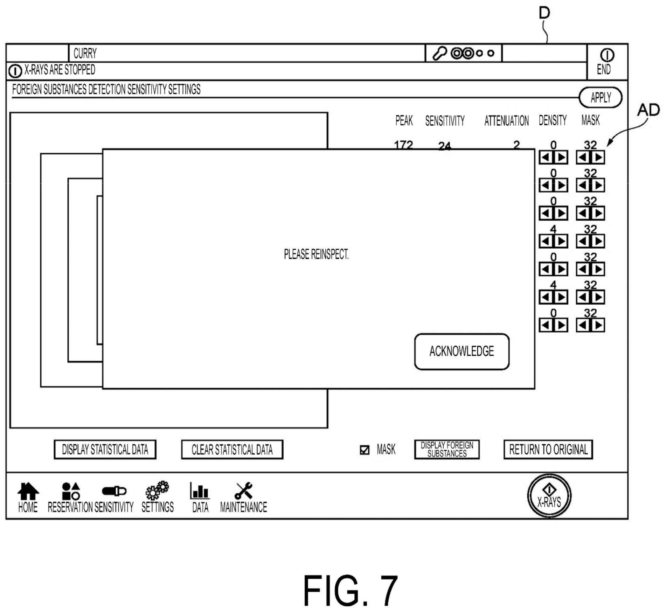

The control device 9 determines whether adjustment of each of the plurality of parameters has ended. In the present embodiment, the control device 9 determines whether adjustment of each of the parameters of the inspections 1 to 7 has ended. When it is determined that the adjustment of each of the plurality of parameters has ended, the control device 9 displays, on the display operation unit 8, an indication for prompting a reinspection including acquiring an image of the article G and detecting defects in the article using the adjusted parameters. FIG. 7 is a diagram illustrating an example of an indication for prompting a reinspection. As illustrated in FIG. 7, the control device 9 displays a pop-up that states, for example, "Please reinspect". The display of the pop-up can be finished by pressing the "Acknowledge" button.

As described above, in the X-ray inspection device 1 according to the present embodiment, when adjusting parameters on the adjustment screen AD, the control device 9 displays, on an image, only a detection result of an inspection corresponding to the parameters being adjusted. That is, in the X-ray inspection device 1, detection results of inspections corresponding to parameters other than those being adjusted are not displayed on an image. For this reason, in the X-ray inspection device 1, a parameter can be adjusted while confirming only a detection result of the parameters being adjusted. Thereby, in the X-ray inspection device 1, changes in detection result according to changes in parameters can be recognized, and thus the parameters can be appropriately adjusted. In this manner, in the X-ray inspection device 1, parameters can be easily adjusted.

In the X-ray inspection device 1 according to the present embodiment, when information indicating that parameter adjustment has ended is acquired, the control device 9 displays, on an image, defect detection results for the plurality of inspections. With this configuration, when the adjustment of the parameters has ended, detection results for all inspections can be displayed on the image without any operation to be performed by an operator.

In the X-ray inspection device 1 according to the present embodiment, the adjustment screen AD includes a plurality of presentation parts C that indicate whether adjustment has ended for each of a plurality of parameters. When information indicating that parameter adjustment has ended is acquired, the control device 9 highlights and displays the presentation part C corresponding to the parameter. With this configuration, it is possible to recognize at a glance parameters for which adjustment has ended.

In the X-ray inspection device 1 according to the present embodiment, the control device 9 determines that parameter adjustment has ended when a predetermined time has elapsed since stopping an operation to adjust the parameters. With this configuration, the control device 9 can determine the point in time when the parameter adjustment has ended.

In the X-ray inspection device 1 according to the present embodiment, when adjustment of one of a plurality of parameters has ended but adjustment of the other parameters has not been performed, and a predetermined time has elapsed since the adjustment of the one parameter has ended, the control device 9 displays, on the display operation unit 8, a warning indicating that the adjustment of the other parameters has not ended. With this configuration, an operator can recognize that there are parameters that have not been adjusted.

In the X-ray inspection device 1 according to the present embodiment, when the control device 9 determines that adjustment of each of a plurality of parameters has ended, the control device 9 displays, on the display operation unit 8, an indication for prompting a reinspection including acquiring an image of an article and detecting defects in the article using the adjusted parameters. With this configuration, after the adjustment of the parameters has ended, the operator can be prompted to perform an inspection based on the parameters having been adjusted.

Although an embodiment of the present invention has been described above, the present invention is not necessarily limited to the above-described embodiment, and various modifications can be made without departing from the gist of the present invention.

In the embodiment described above, a mode of the X-ray detection unit 7 as a so-called photon-counting type sensor has been described as an example. However, the X-ray detection unit 7 may include a first line sensor and a second line sensor. Each of the first line sensor and the second line sensor is configured with X-ray detection elements (not illustrated) arrayed one-dimensionally in a horizontal direction perpendicular to the conveyance direction A. The first line sensor detects X-rays in a low-energy band transmitted through the article G and a conveyance belt of the conveyance unit 5. The second line sensor detects X-rays in a high-energy band transmitted through the article G, the conveyance belt of the conveyance unit 5, and the first line sensor. The X-ray detection unit 7 may be configured to include one line sensor or may use another sensor.

In the embodiment described above, an example has been described in which the inspection results of the inspections 1 to 7 are displayed differently using different line types. However, the inspection results of the inspections 1 to 7 may also be displayed differently using different colors, or the like.

In the embodiment described above, the presentation part C is a check box. However, the presentation part may be in other forms, such as highlighting (changing inspection items for which parameter adjustment has ended to thick characters).

In the embodiment described above, an example has been described in which it is determined that parameter adjustment has started when a user touches the region of the adjustment screen AD on the display operation unit 8, but the present invention is not limited thereto. For example, when the user touches one detection result (the detection result of any of the inspections 1 to 7) among the detection results of a plurality of inspections (inspections 1 to 7) on the image O of the article G, it may be determined that parameter adjustment has started for the inspection corresponding to the one detection result.

### Reference Signs List

1 X-ray inspection device, 5 Conveyance unit, 6 X-ray irradiation unit, 7 X-ray detection unit, 8 Display operation unit, 9 Control device (control device for defect inspection, display control unit, first acquisition unit, determination unit, second acquisition unit, image acquisition unit), AD Adjustment screen, C Presentation part, G Article, O Image.

## Claims

1. A control device (9) for defect inspection, the device (9) comprising a display control unit configured to output an image (O) of an article (G) obtained by irradiating the article (G) with X-rays and an adjustment screen image (AD),
wherein
the display control unit is further configured to:
receive, on the adjustment screen image (AD), adjustment operations of a plurality of parameters, each parameter being related to each of a plurality of inspections for detecting a defect in the article (G) based on the image (O), and
output, on the image (O), only a detection result of the inspection corresponding to a parameter being adjusted when that parameter is adjusted on the adjustment screen image (AD).

2. The control device (9) for defect inspection according to claim 1, further comprising a first acquisition unit configured to acquire information indicating that adjustment of the plurality of parameters has ended,
wherein the display control unit is further configured to output a defect detection result of each of the plurality of inspections on the image (O) when the first acquisition unit acquires the information indicating that adjustment of the plurality of parameters has ended.

3. The control device (9) for defect inspection according to claim 2, wherein
the adjustment screen image (AD) includes a plurality of presentation parts (C), each of which indicates whether adjustment of a corresponding parameter has ended, and
the display control unit is further configured to output the adjustment screen image (AD) which distinguishes a first presentation part (C) from a second presentation part (C),
the first presentation part (C) corresponding to a first parameter for which the first acquisition unit acquires the information indicating that adjustment of the first parameter has ended,
the second presentation part (C) corresponding to a second parameter for which the first acquisition unit acquires no information indicating that adjustment of the second parameter has ended.

4. The control device (9) for defect inspection according to claim 2 or 3, wherein
the first acquisition unit is further configured to determine that adjustment of the plurality of parameters has ended when a predetermined time has elapsed since receiving the adjustment operations.

5. The control device (9) for defect inspection according to any one of claims 2 to 4, wherein
the display control unit is further configured to output a warning indicating that adjustment of other parameters has not ended after adjustment of one of the parameters has ended, when adjustment operations of the other parameters have not been received, and when a predetermined time has elapsed since the end of adjustment operation of the one of the parameters.

6. The control device (9) for defect inspection according to any one of claims 1 to 5, further comprising:
a determination unit configured to determine whether adjustment of each of the plurality of parameters has ended,
wherein the display control unit is further configured to output an indication prompting a reinspection when the determination unit determines that adjustment of each of the plurality of parameters has ended,
the reinspection including acquiring the image (O) of the article (G) and detecting a defect in the article (G) using the parameters having been adjusted.

7. The control device (9) for defect inspection according to any one of claims 1 to 6, further comprising:
a second acquisition unit configured to acquire information indicating that adjustment of the parameters has started,
wherein the display control unit is configured to output a detection result of each of the plurality of inspections on the image (O) before adjustment of the parameters starts.

8. The control device (9) for defect inspection according to claim 7, wherein
the second acquisition unit is further configured to determine that adjustment of the parameters has started when an operation to adjust the parameters has started.

9. An X-ray inspection device (1) comprising:
a conveyance unit (5) configured to continuously convey an article (G);
an irradiation unit (6) configured to irradiate the article (G) with X-rays;
a detection unit (7) configured to detect the X-rays emitted from the irradiation unit (6) and transmitted through the article (G);
an image acquisition unit configured to acquire the image (O) of the article (G) generated based on a detection result of the detection unit (7); and
the control device (9) for defect inspection according to any one of claims 1 to 8.

10. A control method for defect inspection, the method comprising:
outputting an image (O) of an article (G) obtained by irradiating the article (G) with X-rays, and an adjustment screen image (AD), and
receiving, on the adjustment screen image (AD), adjustment operations of a plurality of parameters, each parameter being related to each of a plurality of inspections for detecting a defect in the article (G) based on the image (O),
wherein
the outputting of the image (O) includes outputting, on the image (O), only a detection result of the inspection corresponding to a parameter being adjusted when that parameter is adjusted on the adjustment screen image (AD).

11. A control program for defect inspection, the program causing a computer to function as a display control unit configured to output an image (O) of an article (G) obtained by irradiating the article (G) with X-rays, and an adjustment screen image (AD) on which a plurality of parameters are adjustable, the parameters being related to each of a plurality of inspections for detecting a defect in the article (G) based on the image (O),
wherein the display control unit is further configured to:
receive, on the adjustment screen image (AD), adjustment operations of a plurality of parameters, each parameter being related to each of a plurality of inspections for detecting a defect in the article (G) based on the image (O), and
output, on the image (O), only a detection result of the inspection corresponding to a parameter being adjusted when that parameter is adjusted on the adjustment screen image (AD).
